# EUROPÄISCHE PATENTSCHRIFT

(11) **EP 1 842 718 B1**
(45) Veröffentlichungstag und Bekanntmachung des Hinweises auf die Patenterteilung: **08.12.2010**
(21) Anmeldenummer: 07105516.4
(22) Anmeldetag: 03.04.2007
(51) Int. Cl.: B60N 3/00, B64D 11/06

(54) **Fahrzeugsitz mit einem Klapptisch und Klapptisch für einen Fahrzeugsitz**
Vehicle seat with a folding table and folding table for a vehicle seat
Siège de véhicule doté d'une table pliante et table pliante pour siège de véhicule

(30) Priorität: 08.04.2006 DE 102006016700
(43) Veröffentlichungstag der Anmeldung: 10.10.2007
(73) Patentinhaber: GRAMMER AG, 92224 Amberg (DE)
(72) Erfinder: Tobehn, Andreas, 91238 Engelthal (DE)
(74) Vertreter: Hannke, Christian

(56) Entgegenhaltungen:
- EP-A- 1 683 719
- WO-A-02/096700
- WO-A-03/064207
- DE-U1-202004 016 340
- GB-A- 2 298 569

## Beschreibung

Die Erfindung betrifft einen Fahrzeugsitz mit einem Klapptisch sowie einen Klapptisch für einen Fahrzeugsitz.

Aus der DE 196 31 455 A1 ist bereits ein Fahrzeugsitz bekannt, an deren Rückseite eine Tischplatte vorgesehen ist, die zwischen einer hochgeklappten Nichtgebrauchsstellung und einer aufgeklappten Gebrauchsstellung verschwenkbar ist.

Auch aus der DE 189 48 889 A1 ist ein Klapptisch für einen Fahrzeugsitz, nämlich Autositz, bekannt. Dieser ist an einem rückwärtigen Teil des Sitzes montiert und kann zwischen einer Gebrauchsstellung und einer nicht funktionellen Stellung verbracht werden. Der Klapptisch weist einen fest an die Tischplatte angeformten Griff auf, der in der Gebrauchsstellung an der von dem Sitz abgewandten Seite der Tischplatte positioniert ist.

Ein Sitz für ein Verkehrsmittel mit einer auf der Rückseite vorgesehenen Verkleidungsplatte ist aus der DE 94 22 200 U1 bekannt. Mit dieser Verkleidungsplatte ist dabei ein Klapptisch gelenkig verbunden. Die Gelenkverbindung zum Anlenken des Klapptisches an die die Sitzrückseite bedeckende Verkleidungsplatte wird dabei über Streben bewirkt.

Aus der WO 031064207 A, die als nächstliegender Stand der Technik betrachtet wird, geht ein verstaubarer Tisch hervor, der direkt oder indirekt an einen Fahrzeugsitz befestigt werden kann und zwei Tischelemente aufweist, wobei das zweite Tischelement gegenüber dem ersten Tischelement klappbar und verschiebbar angeordnet ist.

Die GB 22 98 569 A offenbart eine Tragvorrichtung für Bestandteile einer Arbeitsstation, wie einem Computerterminal, wobei diese Tragvorrichtung mindestens einen Montagesitz, ein Teleskoprohr, einen Tragarm und eine Tragplatte zum Aufnehmen eines Bildschirmes aufweist. Zusätzlich ist ein zweiter Tragbereich, der gegenüber der ersten Tragplatte verschiebbar ist, angeordnet und als Gestänge ausgeführt, um zur Aufnahme einer Tastatur zu dienen. Je nach Ausfahrposition ist dieser zweite Tragbereich gegenüber der ersten Tragplatte hinsichtlich der Neigung unterschiedlich ausgerichtet.

Die DE 299 08 621 U1 offenbart einen zwischen einer eingeklappten und einer ausgeklappten Stellung verlagerbaren Klapptisch, der an der Rückseite eines Fahrzeugsitzes angeordnet ist. Der Klapptisch weist ein schubladenförmiges, in der DE 299 08 621 U1 als untere Tischplatte bezeichnetes, Tisch-Unterteil auf, sowie ein oberes Tischteil. In dem Tisch-Unterteil kann beispielsweise ein Schreibblock oder Stifte aufgenommen werden. Im Gegensatz zu üblichen Schubladenanordnungen ist gemäß der DE 299 08 621 U1 in der ausgeklappten Stellung des Klapptisches nicht das schubladenförmige Unterteil translatorisch verlagerbar, sondern das obere Tischteil.

Vor diesem Hintergrund liegt der Erfindung die Aufgabe zugrunde, einen Klapptisch für Fahrzeugsitze zu schaffen, der sich flexibel und einfach sowie auf sichere und komfortable Weise an unterschiedliche Bedürfnisse des Verwenders anpassen lässt.

Erfindungsgemäß wird ein Klapptisch gemäß Anspruch 1 vorgeschlagen. Ein erfindungsgemäßer Fahrzeugsitz ist Gegenstand des Anspruchs 10. Bevorzugte Weiterbildungen sind Gegenstand der Unteransprüche.

Es wird also insbesondere ein Klapptisch für einen Fahrzeugsitz, wie z.B. Bahnsitz, vorgeschlagen, der eine (erste) Tischplatte aufweist, die zwischen zumindest einer eingeklappten und zumindest einer ausgeklappten Stellung verlagerbar ist. Der Klapptisch bzw. die Tischplatte stellt in seiner bzw. ihrer zumindest einen ausgeklappten Stellung einen ersten, vorzugsweise im Wesentlichen ebenen, gegebenenfalls mit einer Profilierung, wie Bechermulde oder dergleichen, versehenen, Auflagebereich für Gegenstände bereit. Der Klapptisch weist ferner eine relativbeweglich gegenüber der Tischplatte angeordnete zweite Einrichtung, nämlich Strebeneinrichtung, auf, die zwischen zumindest einer eingefahrenen und zumindest einer ausgefahrenen Stellung verlagerbar ist und zumindest einen in der ausgefahrenen Stellung im Zusammenwirken mit dem ersten Auflagebereich als zweiter Auflagebereich für Gegenstände wirkenden Abschnitt aufweist, wobei an der Strebeneinrichtung ein oder mehrere Blöcke angeformt sind, die als zweite Auflagebereiche dienen.

Die Strebeneinrichtung ist vorzugsweise ein Bügel, wie beispielsweise ein U-förmiger Bügel. Die Strebeneinrichtung kann einstückig ausgebildet sein. Es kann auch vorgesehen sein, das die Strebeneinrichtung mehrere relativbeweglich zueinander angeordnete Streben aufweist. In vorteilhafter Gestaltung ist die Strebeneinrichtung bzw. der Bügel lineargeführt. Es kann aber auch vorgesehen sein, dass die Strebeneinrichtung für das Verbringen zwischen einer eingefahrenen und einer ausgefahrenen Stellung schwenkbar gelagert ist. Hierzu kann beispielsweise ein Schwenkgelenk vorgesehen sein. Es kann aber auch vorgesehen sein, dass für verschiedene Streben der Strebeneinrichtung separate Schwenkgelenke vorgesehen sind. Die Strebeneinrichtung bzw. der Bügel kann beispielsweise an der Tischunterseite gehaltert sein.

In vorteilhafter Ausgestaltung ist eine Überlastsicherung bzw. ein Überlastschutz für die Strebeneinrichtung bzw. den Bügel vorgesehen. Besonders zweckmäßig ist diese Überlastsicherung bzw. dieser Überlastschutz reversibel ausgebildet.

In vorteilhafter Ausgestaltung ist ein Anschlag vorgesehen, der den Klapptisch in einer ausgeklappten Stellung hält, insbesondere im Wesentlichen waagerecht hält.

Anhand der Figuren soll im Folgenden ein Ausführungsbeispiel der Erfindung näher erläutert werden, das verschiedene vorteilhafte Weiterbildungen der Erfindung zeigt, die einzeln oder in beliebiger Kombination gegeben sein können. Dabei zeigt:
- Fig. 1: eine 3-dimensionale Schrägansicht eines beispielhaften erfindungsgemäßen Klappti- sches von oben, wobei der Klapptisch in einer Stellung gezeigt ist, die einer ausge- klappten Stellung entspricht, und wobei die Strebeneinrichtung in einer eingefahrenen Stellung ist;
- Fig. 2: den Klapptisch gemäß Fig. 1 aus einer Blickrichtung, die der in Fig. 1 entspricht, wo- bei die Strebeneinrichtung in einer ausgefahrenen Stellung ist;
- Fig. 3: den Klapptisch gemäß den Fig. 1 und 2 in einem Zustand, in dem die Überlastsiche- rung für die Strebeneinrichtung ausgelöst worden ist;
- Fig. 4: eine 3-dimensionale Explosionsansicht des Klapptisches gemäß den Fig. 1 bis 3;
- Fig. 5: eine - bei ausgeklapptem Klapptisch - Ansicht von unten auf den Klapptisch gemäß den Fig. 1 bis 4;
- Fig. 6: eine - bezogen auf Fig. 5 - Seitenansicht des Klapptisches gemäß den Fig. 1 bis 5;
- Fig. 7: eine - bei ausgeklapptem Klapptisch - Frontalansicht auf den Klapptisch gemäß den Fig. 1 bis 5 aus der Richtung, die der Rückenlehne eines Sitzes abgewandt ist, wenn der Klapptisch auf der der Sitzfläche abgewandten Seite der Rücklehne eines Sitzes angeordnet und an dem Sitz befestigt ist;
- Fig. 8: eine - bei ausgeklapptem Klapptisch - Ansicht von oben auf den Klapptisch gemäß den Fig. 1 bis 7;

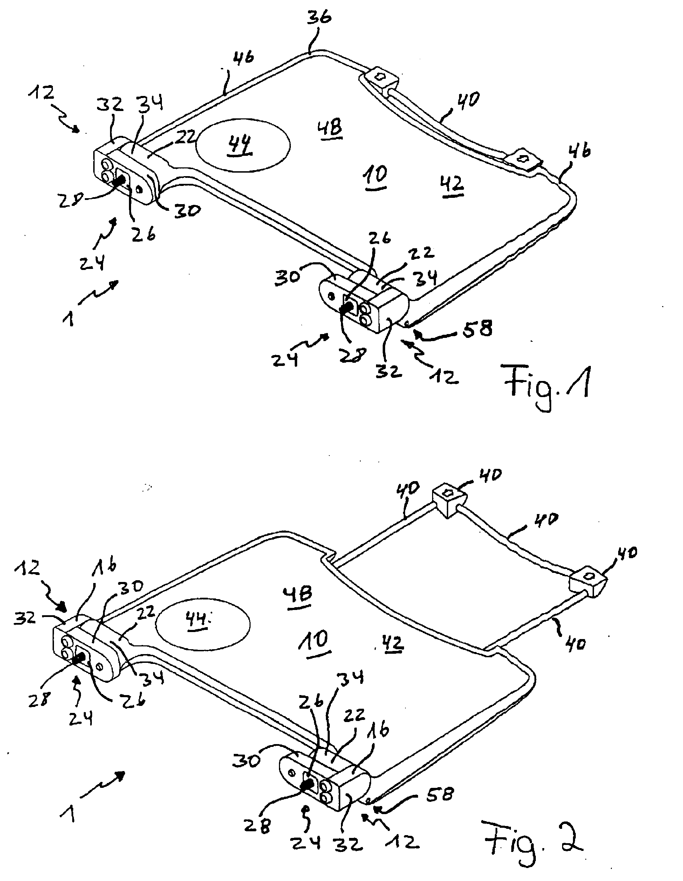

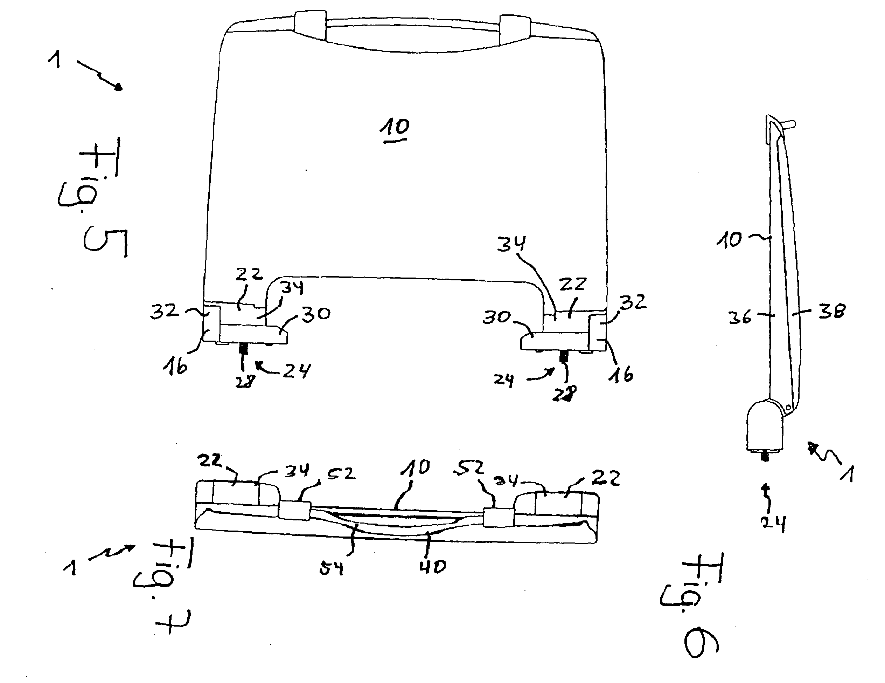

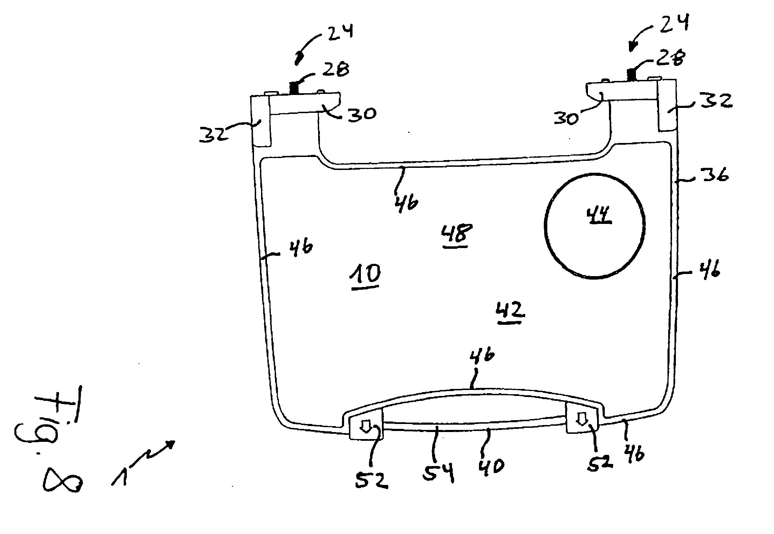

Die Fig. 1 bis 8 zeigen einen beispielhaften, erfindungsgemäßen Klapptisch 1 in schematischen Ansichten. Der Klapptisch 1 kann beispielsweise auch Bestandteil eines beispielhaften erfindungsgemäßen - in den Figuren 1 bis 8 allerdings nicht dargestellten - Fahrzeugsitzes sein.

Der Klapptisch 1 gemäß den Figuren 1 bis 8 weist eine Tischplatte 10 auf, die zwischen einer oder zumindest einer eingeklappten und einer oder zumindest einer ausgeklappten Stellung verlagerbar ist. Zu diesem Zweck ist ein Schwenkmechanismus 12 vorgesehen, mittels welchem die Tischplatte 10 schwenkbar angeordnet ist bzw. an einer Vorrichtung, wie beispielsweise (erfindungsgemäßer) Fahrzeug- bzw. Passagiersitz, angeordnet werden kann.

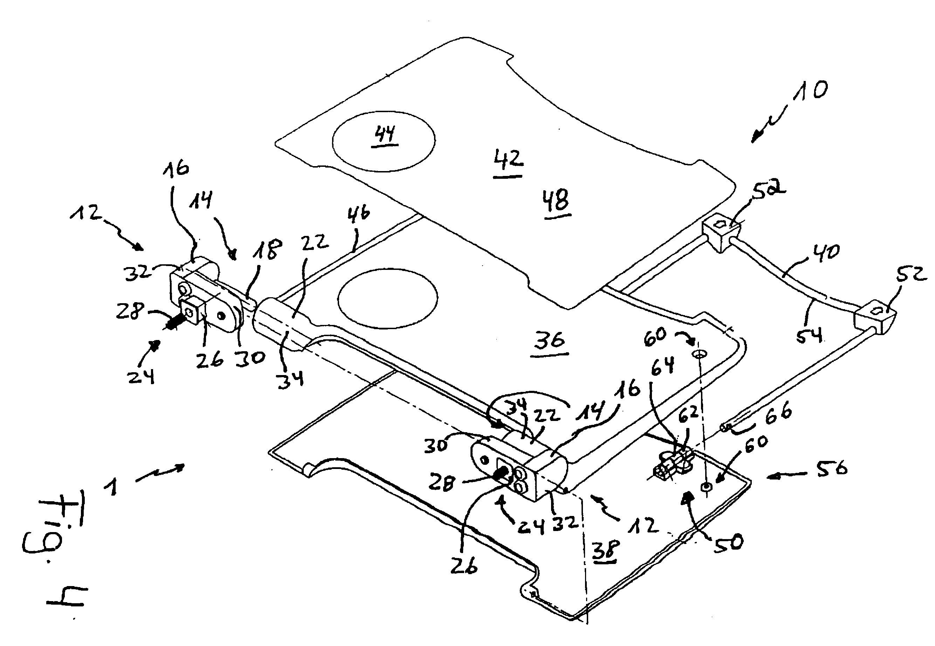

Wie in Figur 4 abgebildet, ist der Schwenkmechanismus 12 hier so gestaltet, dass die Tischplatte 10 bei ihrer Bewegung zwischen ihrer eingeklappten und der ausgeklappten Stellung - bzw. umgekehrt - um ein Gelenk 14 verschwenkt wird, das körperlich ausgebildet ist und genau eine Gelenkachse ausbildet, die ihre Lage im Raum beim Verschwenken der Tischplatte 10 beibehält, sofern die Vorrichtung, wie beispielsweise Fahrzeug- bzw. Passagiersitz bzw. Rückenlehne eines solchen, an der der Tisch 1 montiert ist, im Raum nicht bewegt wird.

Die Figur 4 zeigt weiter, dass der Schwenkmechanismus 12 hier einen Scharnierblock 16 bzw. zwei Scharnierblöcke 16 aufweist. An diesen Scharnierblöcken 16 ist jeweils eine Achse bzw. ein Bolzen 18 vorgesehen, die bzw. der hier einstückig mit dem Scharnierblock 16 ausgebildet ist, prinzipiell aber auch als separat hergestelltes Teil an diesem fixiert sein kann. Die Achsen bzw. Bolzen 18 sind so angeordnet, dass sie im Wesentlichen miteinander fluchten und mit ihren freien Enden einander zugewandt sind.

Für das Zusammenwirken mit diesen Achsen bzw. Bolzen 18 weist der Schwenkmechanismus 12, Löcher, die insbesondere Bohrungen sind, die in der Tischplatte 10 vorgesehen sind und die Achsen bzw. Bolzen 18 aufnehmen, auf, um eine gelenkige Verbindung zwischen der Tischplatte 10 und den Scharnierblöcken 16 zu schaffen.

Die Löcher, die im Folgenden als Bohrungen bezeichnet werden, sind hier in Verdickungen 22 vorgesehen, die an dem im Folgenden noch genauer erläuterten Tischoberteil 36 fest angeordnet sind.

Die Scharnierblöcke 16 können mittels geeigneter Befestigungsmittel, wie beispielsweise Schrauben, an einen Sitz eines Fahrzeuges befestigt bzw. gehalten werden bzw. - im Hinblick auf einen erfindungsgemäßen Sitz - befestigt bzw. gehalten sein.

Die vorerwähnte Gestaltung ist ein Beispiel für eine Ausführungsform, bei der die Tischplatte 10 zwischen einer eingeklappten Endstellung und einer ausgeklappten Endstellung durch eine reine Schwenkbewegung um genau eine Achse verlagerbar ist. Es kann alternativ aber auch vorgesehen sein, dass die Tischplatte 10 zwischen Endstellungen der angesprochenen Art durch eine Überlagerung oder Abfolge einer Schwenkbewegung und einer translatorischen Bewegung, bzw. umgekehrt, verlagerbar ist.

Anzumerken ist allerdings, dass der Schwenkmechanismus 12 auch anders ausgebildet sein kann. Beispielsweise können die angesprochenen Achsen bzw. Bolzen 18 an der Tischplatte 10 vorgesehen sein, und entsprechende Löcher an den Scharnierblöcken 16; diese beispielhafte alternative Gestaltungsmöglichkeit ist ein Beispiel für eine weitere Ausführungsform, bei der- wie oben angesprochen - eine bzw. genau eine Gelenkachse für die Bewegung der Tischplatte 10 zwischen ihrer eingeklappten und ausgeklappten Stellung ausgebildet wird, wobei diese Gelenkachse beim Verschwenken der Tischplatte 10 ihre Lage im Raum beibehält.

Alternativ kann der Schwenkmechanismus 12 allerdings auch so ausgebildet sein, dass er mehrere Schwenkachsen ausbildet und / oder eine oder mehrere Schwenkachsen beim Schwenken der Tischplatte 10 im Raum - insbesondere quer zu ihrer Erstreckungsrichtung - verlagert werden. Die Schwenkachse kann - muss allerdings nicht - im Bereich eines verkörperten Scharniers bzw. Gelenkes gelegen sein; sie kann beispielsweise aber auch eine gedachte Achse sein, die an einer Stelle angeordnet ist, an der kein Bauteil oder ein von einem Gelenk bzw. Scharnier verschiedenes Bauteil des Klapptisches 1 positioniert ist.

Der Schwenkmechanismus 12 kann in entsprechender Abwandlung der in den Figuren 1 bis 8 gezeigten Gestaltung beispielsweise auch so ausgebildet sein, wie er gemäß der eingangs erwähnten DE 94 22 200 U1 gestaltet ist, also mittels Streben, die die Tischplatte 10 mit dem Sitz verbinden. Anzumerken ist in diesem Zusammenhang allerdings, dass solche Streben nicht mit der im Folgenden noch angesprochenen Strebeneinrichtung 40 gemäß den Figuren 1 bis 4 und Fig. 7 zu verwechseln sind, die gegenüber den für das Anlenken des Tisches an einen Sitz aus der DE 94 22 200 U1 bekannten Streben eine deutlich abweichende Funktion aufweist.

Gemäß der Figur 4 weist der Klapptisch 1 weist ferner eine Bremseinrichtung 24 für das Abbremsen der Schwenkbewegung der Tischplatte 10 auf. Die Bremseinrichtung 24 weist hier zwei federbelastete Klötze 26 auf. Unter Wirkung der Federkraft der als Druckfedern gestalteten Federn 28 wirken diese Klötze 26 auf die zu diesen relativbeweglich angeordnete Tischplatte 10 derart, dass der (Schwenk-)Bewegung der Tischplatte 10 eine Bremskraft entgegenwirkt. Die Klötze 26 können beispielsweise einen geeigneten Bremsbelag, der beispielsweise aus Gummi ist, aufweisen, oder aus einem entsprechenden Material bestehen.

In dem in den Figuren1 bis 8 gezeigten Ausführungsbeispiel ist der Scharnierblock 16 - zumindest in sehr grober Annäherung - im Querschnitt U-förmig gestaltet, wobei der Bolzen 18 zwei im Zusammenwirken L-förmig angeordnete Flansche 30, 32 zu der angesprochenen U-Form ergänzt. In dem im Wesentlichen parallel zum Bolzen 18 gelegenen Flansch 30 ist dabei eine beispielsweise als Durchgangsöffnung gestaltete Öffnung vorgesehen, in der der Klotz 26 aufgenommen ist. Zum bremsenden Einwirken auf die Tischplatte 10 stützt sich der mittels der Feder 28 vorgespannte Klotz 26 hier an der Außenmantelfläche 34 der Verdickung 22 ab, die beispielsweise hierzu einen zylindrischen Abschnitt ausbildet. Insbesondere bei einer solchen Gestaltung, bei der die Außenmantelfläche 34 der Verdickung 22 einen im Wesentlichen zylindrischen Abschnitt für das Zusammenwirken mit dem Klotz 26 aufweist, kann vorgesehen sein, dass der Klotz 26 in seinem Kontaktbereich für die Außenmantelfläche 34 einen entsprechend konvex gekrümmten Abschnitt entsprechenden Durchmessers ausbildet.

Es kann aber auch vorgesehen sein, dass die Bremseinrichtung 24 eine entlang des Schwenkweges der Tischplatte 10 variierende Bremskraft bereitstellt. Beispielsweise kann vorgesehen sein, dass eine eingeklappte und eine ausgeklappte Endlage für die Tischplatte 10 existiert und die Bremskraft in Richtung dieser beiden Endlagen jeweils zunimmt. Dies kann beispielsweise durch eine entsprechende Konturgebung der Außenmantelfläche 34 erreicht werden.

Anzumerken ist, dass die angesprochenen Endlagen auch unabhängig von der angesprochenen, in Richtung der Endlagen zunehmenden Bremskraft gegeben sein können. In solchen Endlagen kann beispielsweise jeweils ein Anschlag bereitgestellt sein. In der eingeklappten Endlage kann ein solcher Anschlag beispielsweise von der Rücklehne eines Sitzes bereits gestellt werden.

Weiter sei angemerkt, dass eine Bremseinrichtung 24 für die Tischplatte 10 auch anders gestaltet sein kann, als es zuvor erläutert wurde.

Der Klapptisch 1 weist eine - in den Figuren 1 bis 8 nicht näher gezeigt - erste Arretiereinrichtung zum Arretieren des Klapptisches 1 in seiner eingeklappten Stellung bzw. geschlossenen Position. Hierzu kann beispielsweise das Tischoberteil 36 eine Kerbung aufweisen. Diese Kerbung kann beispielsweise in die Außenmantelfläche 34 der Verdickung 22 derart eingebracht sein, dass der Klotz 26 in der eingeklappten Stellung bzw. geschlossenen Position des Klapptisches 1 bzw. der Tischplatte 10 in diese Kerbung eingreift oder diese hintergreift.

Die Tischplatte 10 des Klapptisches 1 weist ein bereits angesprochenes Tischoberteil 36 sowie ein Tischunterteil 38 auf. Wie die Figuren 1 bis 8 zeigen, können das Tischoberteil 36 sowie das Tischunterteil 38 jeweils plattenartig gestaltet sein. An das Tischoberteil 36 sind die oben angesprochenen Verdickungen 22 angeformt.

Das Tischoberteil 36 sowie das Tischunterteil 38 können beispielsweise aus Druckguss gefertigt sein.

Die Tischplatte 10 weist gemäß dem in den Figuren 1 bis 8 gezeigten Ausführungsbeispiel ferner eine im Wesentlichen kratzfeste Deckschicht bzw. Deckplatte 42 auf, die beispielsweise aus HPL ist. Die Deckschicht bzw. Deckplatte 42 kann mit einer Profilierung versehen sein, wie beispielsweise einer in den Fig. gezeigten Bechermulde 44.

Die Deckschicht bzw. Deckplatte 42 kann beispielsweise in das Tischoberteil 36 eingelassen sein, so dass sie seitlich - vorzugsweise umlaufend - von einem Steg bzw. Rand 46 des Tischoberteils 36 flankiert wird. Dabei kann vorgesehen sein, dass Steg bzw. Rand 46 und die Deckschicht bzw. Deckplatte 42 auf der Oberseite im Wesentlichen bündig miteinander abschließen, wobei allerdings auch eines dieser Teile vorstehen kann.

Die Oberseite - und der Begriff Oberseite bezieht sich insbesondere auf die ausgeklappte Stellung des Klapptisches 1 bzw. der Tischplatte 10-der Tischplatte 10 bildet in der ausgeklappten Stellung der Tischplatte 10 bzw. des Klapptisches 1 einen ersten Auflagebereich 48 für Gegenstände. Gemäß den Figuren 1, 4 und 8 wird dieser erste Auflagebereich 48 hier also insbesondere von der Deckschicht bzw. Deckplatte 42 bzw. dem Rand 46 gebildet.

Der Klapptisch 1 weist ferner eine Strebeneinrichtung 40 auf, die im in den Figuren 1 bis 8 gezeigten Ausführungsbeispiel als Bügel bzw. Drahtbügel gestaltet ist. Diese Strebeneinrichtung 40 ist gegenüber der Tischplatte 10 relativbeweglich angeordnet. Die Strebeneinrichtung 40 - im Folgenden wird von Bügel 40 gesprochen, da die Strebeneinrichtung 40 gemäß dem in den Figuren 1 bis 8 gezeigten Ausführungsbeispiel ein Bügel ist - kann zwischen einer eingefahrenen und einer ausgefahrenen Stellung bzw. Endstellung bewegt werden. Der Bügel 40 ist hier mittels einer Linearführungseinrichtung 50, bevorzugt Gleitlager, an der Tischplatte 10 - hier am Tischunterteil 38 - lineargeführt.

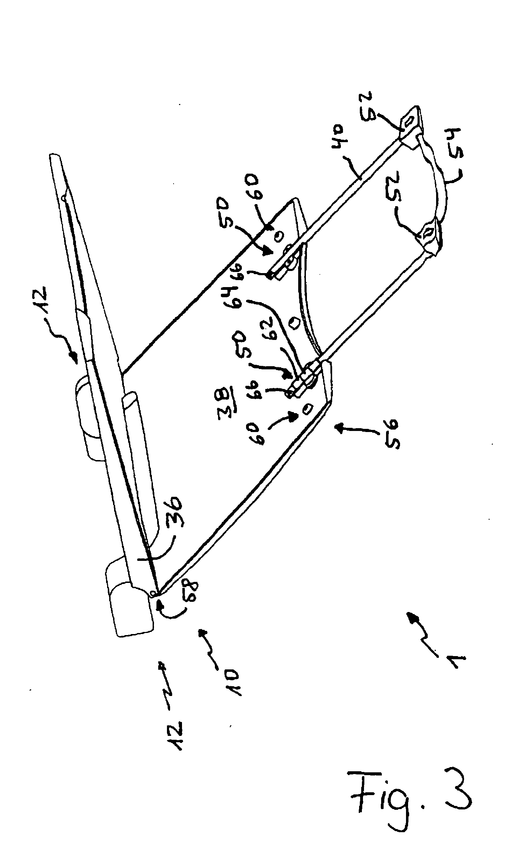

Die Strebeneinrichtung 40 bzw. der Bügel 40 ist in diesem Ausführungsbeispiel also als ausziehbare Strebeneinrichtung 40 bzw. als ausziehbarer Bügel 40 gestaltet. Bei ausgeklapptem Tisch 1 bzw. bei ausgeklappter Tischplatte 10 kann der Bügel 40 stufenlos linear ausgezogen werden, um - insbesondere wahlweise - eine bzw. mehrere erweiterte bzw. vom ersten Auflagebereich 48 (weiter) beabstandete Auflagen für Gegenstände, wie z.B. Notebook oder Zeitung oder Tablett oder dergleichen, zu bieten. Zu diesem Zweck bildet der Bügel 40 zweite Auflagebereiche 52 aus, die beispielsweise - wie in den Fig 3, 4 und 8 gezeigt - blockartig ausgebildet sind. Diese - hier als Auflagen bzw. zweite Auflagebereiche 52 dienenden Blöcke können - sofern der Bügel 40 in beispielhafter Ausgestaltung mehrere separat hergestellte Streben aufweist, gleichzeitig eine Koppelfunktion für benachbarte, miteinander gekoppelte Streben aufweisen; der Bügel 40 kann aber auch von einer einstückig, vorzugsweise im Wesentlichen U-förmig ausgebildeten Strebe gebildet sein, an welcher ein oder mehrere als zweite Auflagebereiche 52 dienende Abschnitte 52 ausgebildet werden oder an welcher ein oder mehrere der angesprochenen Blöcke angeformt sind, um Abschnitte 52 auszubilden, die als zweite Auflagebereiche 52 dienen.

In vorteilhafter Ausgestaltung liegen die zweiten 52 und die ersten Auflagebereiche 48 bei ausgeklapptem Tisch 1 bzw. bei aufgeklappter Tischplatte 10 und ausgezogenem Bügel 40 im Wesentlichen in einer Ebene.

Die zweiten Auflagebereiche 52 werden hier bei der Bewegung von der eingefahrenen Stellung des Bügels 40 in Richtung der ausgefahrenen Stellung des Bügels 40 im Wesentlichen in der durch die Tischplatte 10 aufgespannten Ebene bzw. in einer im Wesentlichen parallel zu dieser Ebene gelegenen Ebene bewegt.

Die - hier zwei - zweiten Auflagebereiche 52 werden hier an den "Ecken" des Bügels 40 ausgebildet, und gewährleisten somit einen - insbesondere verhältnismäßig - gesicherten Stand entsprechender Gegenstände - wie beispielsweise ein Notebook - bei ausgeklapptem Klapptisch 1 und ausgefahrenem Bügel 40. Es kann allerdings auch vorgesehen sein, dass einer oder mehrere zweite Auflagebereiche 52 - alternativ oder ergänzend - an anderen Stellen des Bügels 40 gegeben sind.

In einer besonders vorteilhaften Ausgestaltung kann auch vorgesehen sein - was in den Figuren 1 bis 8 nicht gezeigt ist -, dass ein oder mehrere jeweils einen zweiten Auflagebereich 52 ausbildende Blöcke verschieblich an einer Strebe des Bügels 2 bzw. der Strebeneinrichtung 40 angeordnet ist, so dass der jeweilige Block-je nach abzustützendem Gegenstand oder Bedürfnis eines Benutzers - in eine entsprechende, zweckmäßige Stellung am Bügel 40 verbracht werden kann, um dort einen zweiten Auflagebereich 38 auszubilden. Ein derartiger verstellbarer Block kann beispielsweise in leichtem Presssitz auf der entsprechenden Strebe sitzen, so dass er einerseits verstellbar bleibt, andererseits aber eine ungewollte Positionsänderung dieses verstellbaren Blocks möglichst vermieden wird.

Die zweiten Auflagebereiche 52 können bei eingeklapptem Tisch 1 als Anschlag zur Rückenlehne eines Sitzes dienen, an dem der Klapptisch 1 angeordnet ist bzw. angeordnet werden kann.

Die Strebeneinrichtung 40 bzw. der Bügel 40 weist in vorteilhafter Ausgestaltung - wie es bei der Gestaltung gemäß den Figuren 1 bis 8 der Fall ist - einen Bereich 54 auf, der als Griff 54 für das manuelle Betätigen des Klapptisches 1 zu dessen Ein- bzw. Ausklappen dient.

Dieser Griff 54 ist in vorteilhafter Gestaltung bei eingefahrenem Bügel 40 manuell umgreifbar.

Gemäß der Figur 4 weist der Klapptisch 1 ferner eine Überlastsicherung 56 für die Strebeneinrichtung 40 bzw. den Bügel 40 auf. Zu diesem Zweck wirken das Tischunterteil 38 und das Tischoberteil 36 derart zusammen, dass das Tischunterteil 38 gegenüber dem Tischoberteil 36 bei ausgeklappter Tischplatte 10 nach unten wegschwenken kann. Die Strebeneinrichtung 40 bzw. der Bügel 40 ist dabei - wie bereits angesprochen - an dem Tischunterteil 36 gehalten, so dass der Bügel 40 bei einem Wegschwenken des Tischunterteils 38 gegenüber dem Tischoberteil 36 gemeinsam mit dem Tischunterteil 36 wegschwenkt.

Für dieses "Wegschwenken" des Tischunterteils 38 gegenüber dem Tischoberteil 36 ist das Tischunterteil 38 in der Gestaltung gemäß den Figuren 1 bis 8 an das Tischoberteil 36 mittels eines Scharniers 58 angelenkt. Die Scharnierachse erstreckt sich in vorteilhafter Gestaltung - wie es gemäß den Figuren 1 bis 8 der Fall ist - im Wesentlichen senkrecht zur Verschieberichtung des Bügels 40, was aber auch anders gestaltet sein kann. In diesem Zusammenhang sei angemerkt, dass eine Überlastsicherung 56 für die Strebeneinrichtung 40 beispielsweise auch bei Gestaltungen gegeben sein kann, bei denen die Strebeneinrichtung 40 nicht - wie es in dem in den Fig. 1 bis 8 gezeigten Ausführungsbeispiel der Fall - zwischen ihrer eingefahrenen und ihrer ausgefahrenen Stellung - insbesondere linear - translatorisch bewegt wird; beispielsweise kann vorgesehen sein, dass die Strebeneinrichtung 40 oder jeweiligen Streben einer solchen beim Verbringen zwischen einer eingefahrenen und einer ausgefahrenen Stellung verschwenkt werden. Die Überlastsicherung 56 kann bei solchen Gestaltungen beispielsweise auch so sein, dass dann die Scharnierachse des Scharniers 58 sich evident nicht im Wesentlichen senkrecht zur Verschieberichtung der Strebeneinrichtung bzw. ihrer Streben erstreckt. Aber auch bei Gestaltungen bei denen die Streben zwischen ihrer eingefahrenen und ihrer ausgefahrenen Stellung im Wesentlichen linear bewegt werden, kann die angesprochene Scharnierachse anders orientiert sein, als es zuvor beschrieben wurde. Anzumerken ist in diesem Zusammenhang, dass eine solche Überlastsicherung 56 ohnehin auch anders gestaltet sein kann, als es hier beispielhaft erläutert wird.

Zusätzlich zu dem Scharnier 58 ist für die Überlastsicherung eine, beispielsweise als Rasteinrichtung ausgebildete, Halteeinrichtung 60 für das Halten des Tischunterteils 38 an dem Tischoberteil 36 vorgesehen. Diese Halteeinrichtung 60 gemäß den Figuren 3 und 4 ist lösbar ausgebildet und so gestaltet bzw. angeordnet, dass sie in ihrer nicht-gelösten Stellung ein Wegschwenken des Tischunterteils 38 gegenüber dem Tischoberteil 36 blockiert, und ihrer gelösten Stellung ein Wegschwenken des Tischunterteils 38 gegenüber dem Tischoberteil 36 ermöglicht.

Die Halteeinrichtung 60 ist so gestaltet, dass sie bei einer vorbestimmten an ihr bzw. auf die Strebeneinrichtung bzw. den Bügel 40 wirkenden Grenzlast auslöst, also von ihrer nicht-gelösten in ihre gelöste Stellung übergeht. Es ist also insbesondere vorgesehen, dass bei unsachgemäß hoher Belastung (definierte Auslösekraft) auf den Bügel 40 ein Wegklappen des Tischunterteils 38 mit dem Bügel 40 ausgelöst wird, und zwar insbesondere positionsunabhängig.

Die Überlastsicherung 56, die auch als Überlastsicherungseinrichtung oder Überlastschutz oder Überlastschutzeinrichtung bezeichnet werden kann bzw. bezeichnet wird, bzw. die Halteeinrichtung 60 ist reversibel ausgebildet; sie kann also nach einem überlastbedingten Auslösen wieder in ihre Sicherungsstellung verbracht bzw. wird beim Auslösen nicht zerstört. So ist hier insbesondere vorgesehen, dass nach einem Auslösen der Überlastsicherung 56 der Ausgangszustand dadurch wieder hergestellt werden kann, dass das Tischunterteil 38 gegen das Tischoberteil 36 über einen Rastpunkt, der insbesondere ein Rastpunkt der Halteeinrichtung 60 ist, zugeklappt wird.

Wie bereits angesprochen wird der Bügel 40 an dem Tischunterteil 38 verschieblich gehalten. Die Linearführungseinrichtung 50 weist im Ausführungsbeispiel ein beispielsweise hülseriförmiges Führungselement 62 auf, das mittels einer Sicherung bzw. eines Sicherungselements 64 an dem Tischunterteil 38 gehalten ist. Das Sicherungselement 64 kann beispielsweise am Tischunterteil 38 verschraubt sein, oder auf andere geeignete Weise dort fixiert sein. Im Ausführungsbeispiel ist der Bügel 40 zwischen dem Tischunterteil 38 und dem Tischoberteil 36 gehalten. Das Tischunterteil 38 bildet dabei eine Art Deckel, kann aber auch in weiteren bevorzugten Gestaltungen der Erfindung fehlen. Auch die Deckschicht bzw. Deckplatte 42 kann in alternativer Gestaltung fehlen. Der Bügel bzw. die Strebenanordnung kann beispielsweise an der Tischunterseite verschieblich bzw. beweglich gehalten sein. Es kann ferner zumindest ein Sicherungselement 66 vorgesehen sein, welches ein "Herausrutschen" des Bügels aus der Linearführungseinrichtung 50 verhindert. Der Bügel 40 ist vorzugsweise aus Stahl, insbesondere rostfreiem Stahl. Die zweiten Auflagebereiche 38 ausbildenden Blöcke können beispielsweise ebenfalls aus Stahl, insbesondere rostfreiem Stahl, sein, oder aus Kunststoff, oder einer Materialkombination.

Das Aufklappen des Klapptisches 1 kann durch Ziehen im Griffbereich 54 des Bügels 40 erfolgen. Dabei kann vorgesehen sein, dass der Bügel 40 mittels einer geeigneten Arretiereinrichtung arretiert ist, damit er beim Aufklappen des Tisches 1 nicht ungewollt in eine ausgefahrene Stellung verbracht wird. Bei ausgeklapptem Tisch 1 kann der Bügel 40 - insbesondere durch Betätigung des Griffs 54 - in eine ausgefahrene Stellung verbracht werden um einen erweiterten bzw. weiter von dem ersten Auflagebereich 48 beabstandeten zweiten Auflagebereich bereitzustellen.

Der Sitz, an dem der Klapptisch 1 in vorteilhafter Gestaltung angeordnet ist, kann beispielsweise ein Bahnsitz, oder ein Autositz oder ein Flugzeugsitz oder dergleichen sein. Im Hinblick auf eine beispielhafte erfindungsgemäße Ausgestaltung eines Fahrzeugsitzes ist also insbesondere vorgesehen, dass der Klapptisch 1 auf der Rückseite des Sitzes, wie Bahnsitz, bzw. der Rückenlehne des Sitzes, wie Bahnsitz, angeordnet bzw. gehaltert ist.

Der Klapptisch 1 ist in vorteilhafter Gestaltung so ausgelegt bzw. dimensioniert, dass er für die Auflage eines Notebooks geeignet ist. Sein erster Auflagebereich 48 kann dabei beispielsweise so dimensioniert sein, dass er für die standfeste Ablage eines Notebooks bei dessen Betrieb - insbesondere auch unter Berücksichtigung der Tatsache, dass der Bildschirm gut einsehbar sein soll und der Tisch 1 an einer Rückenlehne gehaltert sein kann, die ggf. den Schwenkbereich des Bildschirm begrenzt - nicht ausreichend ist, wobei durch Verbringen der Strebeneinrichtung 40 bzw. des Bügels 40 in eine ausgefahrene Stellung zweite Auflagebereiche 52 bereitgestellt werden können, die im Zusammenwirken mit dem ersten Auflagebereich 48 eine standfeste Auflage des Notebooks ermöglichen. Ein solches Notebook kann beispielsweise eine Grundfläche aufweisen, die zwischen 20 und 35 cm breit und zwischen 18 und 30 cm tief ist, beispielsweise 27 cm auf 33 cm ist. Beispielsweise kann dabei vorgesehen sein, dass der Bildschirm für ein bequemes Einsehen zwischen 5 und 15 cm über das hintere Ende des Notebooks hinausragt. Durch diese Maßangaben soll die Dimensionierung des Klapptisches 1 allerdings nicht auf bestimmte Abmaße beschränkt sein, obwohl die sich damit ergebenden Abmaße bevorzugter Gestaltung sind.

Das Ausführungsbeispiel zeigt, dass sich dabei einerseits der Bewegungsraum für den Passagier durch Einklappen des Klapptisches 1 vergrößern lässt und andererseits die durch die neben der Fläche der einzelnen Auflagebereiche 48, 52 durch die Relativanordnung der einzelnen Auflagebereiche 48, 52 bestimmte Abstützeignung für Gegenstände variieren lässt. Der Klapptisch 1 kann beispielsweise so ausgelegt sein, dass er im ausgeklappten Zustand einer Belastung von ca. 100 kg (1000 N) (von oben) standhalten kann, wobei der Bügel 40 bei einer (auf ihn wirkenden) Belastung von ca. 10 kg (100 N) oder von ca. 20 kg (200 N) (von oben) nach unten abklappt, was vorzugsweise bei dem jeweils ungünstigstem Kraftangriffspunkt gilt, und insbesondere unfalltechnische Gründe hat.

Der in den Figuren 1 bis 8 gezeigte Klapptisch 10 ist im Wesentlichen - insbesondere abgesehen von der Bechermulde 44 - spiegelsymmetrisch gestaltet, was alternativ aber auch anders sein kann.

Sämtliche in den Anmeldungsunterlagen offenbarten Merkmale werden als efindungswesentlich beansprucht, sofern sie einzeln oder in Kombination gegenüber dem Stand der Technik neu sind.

### Bezugszeichenliste

- 1: Klapptisch
- 10: Tischplatte
- 12: Schwenkmechanismus
- 14: Gelenk
- 16: Scharnierblock von 12
- 18: Bolzen
- 22: Verdickung an 36
- 24: Bremseinrichtung für 1
- 26: Klotz
- 28: Feder
- 30: Flansch von 16
- 32: Flansch von 16
- 34: Außenmantelfläche von 22
- 36: Tischoberteil
- 38: Tischunterteil
- 40: Strebeneinrichtung, Bügel, Drahtbügel
- 42: Deckschicht bzw. Deckplatte von 10
- 44: Bechermulde
- 46: Steg bzw. Rand 46 von 36
- 48: erster Auflagebereich von 1 bzw. 10
- 50: Linearführungseinrichtung
- 52: zweiter Auflagebereich an 40
- 54: Griff
- 56: Überlastsicherung
- 58: Scharnier zwischen 36 und 38
- 60: Halteeinrichtung
- 62: Führungselement von 50
- 64: Sicherungselement für 62
- 66: Sicherungselement an 40

## Patentansprüche

1. Klapptisch für einen Fahrzeugsitz, wobei der Klapptisch (1) eine erste Tischplatte (10) aufweist, die zwischen zumindest einer eingeklappten und zumindest einer ausgeklappten Stellung verlagerbar ist und in ihrer zumindest einen ausgeklappten Stellung einen ersten Auflagebereich (48) für Gegenstände bereitstellt, wobei der Klapptisch (1) ferner eine relativbeweglich gegenüber der ersten Tischplatte (10) angeordnete zweite Einrichtung (40) aufweist, die zwischen zumindest einer eingefahrenen und zumindest einer ausgefahrenen Stellung verlagerbar ist und zumindest einen in der ausgefahrenen Stellung im Zusammenwirken mit dem ersten Auflagebereich (48) als zweiter Auflagebereich (52) für Gegenstände wirkenden Abschnitt (52) aufweist,
**dadurch gekennzeichnet, dass**
die zweite Einrichtung (40) eine Strebeneinrichtung (40) ist, und an der Strebeneinrichtung (40) ein oder mehrere Blöcke angeformt sind, die als zweite Auflagebereiche dienen.

2. Klapptisch nach Anspruch 1,
**dadurch gekennzeichnet, dass**
die Strebeneinrichtung (40) ein Bügel (40) ist, und zwar insbesondere ein im Wesentlichen U-förmig ausgebildeter Bügel (40).

3. Klapptisch nach einem der vorangehenden Ansprüche,
**dadurch gekennzeichnet, dass**
für das Verlagern der Strebeneinrichtung (40) bzw. des Bügels (40) zwischen der eingefahrenen und der ausgefahrenen Stellung eine Linearführung (50) vorgesehen ist.

4. Klapptisch nach einem der vorangehenden Ansprüche,
**dadurch gekennzeichnet, dass**
die Strebeneinrichtung (40) bzw. der Bügel (40) einen Griff (54) bzw. Griffbereich (54) für das Verbringen der Tischplatte (10) von ihrer eingeklappten Stellung in ihre ausgeklappte Stellung ausbildet.

5. Klapptisch nach einem der vorangehenden Ansprüche,
**dadurch gekennzeichnet, dass**
die Strebeneinrichtung (40) bzw. der Bügel (40) zwischen ihrer bzw. seiner eingefahren und seiner bzw. ihrer ausgefahrenen Stellung im Wesentlichen stufenlos verstellbar ist, wobei gegebenenfalls arretierbare Stellungen gegeben sind.

6. Klapptisch nach einem der vorangehenden Ansprüche,
**dadurch gekennzeichnet, dass**
eine Überlastsicherung (56) für die Strebeneinrichtung (40) bzw. den Bügel (40) vorgesehen ist.

7. Klapptisch nach Anspruch 6,
**dadurch gekennzeichnet, dass**
die Überlastsicherung (56) reversibel ausgebildet ist.

8. Klapptisch nach einem der vorangehenden Ansprüche,
**dadurch gekennzeichnet,dass**
die Strebeneinrichtung (40) bzw. der Bügel (40) an der Unterseite des Klapptisches gehalten ist.

9. Klapptisch nach einem der vorangehenden Ansprüche,
**dadurch gekennzeichnet, dass**
der Klapptisch (1) bzw. die Tischplatte (10) ein, vorzugsweise im Wesentlichen plattenförmiges, Tischoberteil (36) sowie ein, vorzugsweise im Wesentlichen plattenförmiges, Tischunterteil (38) aufweist und die Strebeneinrichtung (40) bzw. der Bügel (40) zwischen diesem Tischoberteil (36) und diesem Tischunterteil (38) gehalten ist.

10. Fahrzeugsitz, insbesondere Bahnsitz, mit einer Sitzfläche und einer Rückenlehne und einem auf der der Sitzfläche abgewandten Seite der Rückenlehne angeordnetem Klapptisch (1), der eine relativbeweglich zur Rückenlehne an dieser gehaltene Tischplatte (10) aufweist,
**dadurch gekennzeichnet, dass**
der Klapptisch (1) gemäß einem der vorangehenden Ansprüche ausgebildet ist.

## Claims

1. A folding table for a vehicle seat, wherein the folding table (1) has a first table board (10) which is displaceable between at least one folded-in and at least one folded-out position and which in the at least one folded-out position thereof provides a first deposition area (48) for articles, wherein the folding table (1) additionally has a second means (40) which is arranged so as to be movable relative to the first table board (10) and which is displaceable between at least one retracted and at least one extended position and has at least one portion (52) acting as a second deposition area (52) for articles in the extended position in co-operation with the first deposition area (48), **characterized in that** the second means (40) is a strut means (40), and one or more blocks which act as second deposition areas are formed integrally on the strut means (40).

2. A folding table according to claim 1, **characterized in that** the strut means (40) is a stirrup (40), and in particular a stirrup (40) formed substantially in a U shape.

3. A folding table according to one of the preceding claims, **characterized in that** a linear guide (50) is provided for the displacement of the strut means (40) and the stirrup (40) respectively between the retracted and the extended position.

4. A folding table according to any one of the preceding claims, **characterized in that** the strut means (40) and the stirrup (40) respectively forms a handle (54) and a handle area (54) respectively for moving the table plate (10) from the folded-in position thereof into the folded-out position thereof.

5. A folding table according to any one of the preceding claims, **characterized in that** the strut means (40) and the stirrup (40) respectively is displaceable in a substantially continuous manner between the retracted position thereof and the extended position thereof, wherein optionally lockable positions are provided.

6. A folding table according to any one of the preceding claims, **characterized in that** an overload protection means (56) is provided for the strut means (40) or the stirrup (40).

7. A folding table according to claim 6, **characterized in that** the overload protection means (56) is designed so as to be reversible.

8. A folding table according to any one of the preceding claims, **characterized in that** the strut means (40) and the stirrup (40) respectively is held on the underside of the folding table.

9. A folding table according to any one of the preceding claims, **characterized in that** the folding table (1) and the table board (10) has a preferably substantially plate-shaped upper table part (36) and a preferably substantially plate-shaped lower table part (38), and the strut means (40) and the stirrup (40) respectively is held between this upper table part (36) and this lower table part (38).

10. A vehicle seat, in particular a train seat, with a seat area and a backrest and a folding table (1) which is arranged on the side of the backrest facing away from the seat area and which has a table board (10) held on the backrest so as to be movable relative thereto, **characterized in that** the folding table (1) is designed in accordance with any one of the preceding claims.

## Revendications

1. Table pliante pour une siège d'automobile, dans laquelle la table pliante (1) présente un premier dessus de table(10), qui peut être déplacé entre au moins une position escamotée et au moins une position déployée et dispose, dans sa au moins une position déployée, une première zone de support (48) pour des objets, dans laquelle la table pliante (1) présente en outre un deuxième dispositif (40) agencé de manière à être relativement mobile par rapport au premier dessus de table (10), dispositif (40) qui peut être déplacé entre au moins une position rentrée et au moins une position sortie et qui présente au moins une section (52) agissant, dans la position sortie, en coopération avec la première zone de support (48) comme deuxième zone de support (52) pour des objets,
**caractérisée en ce que**
le deuxième dispositif (40) est un dispositif de soutien (40) et, au celui-ci, est ou sont formés un ou plusieurs blocs qui servent de deuxièmes zones de support.

2. Table pliante selon la revendication 1,
**caractérisée en ce que**
le dispositif de soutien (40) est un étrier (40), en particulier un étrier (40) conformé sensiblement en U.

3. Table pliante selon l'une quelconque des revendications précédentes, **caractérisée en ce que**
il est prévu un guide linéaire (50) pour le déplacement du dispositif de soutien (40) respectivement de l'étrier (40) entre la position rentrée et la position sortie.

4. Table pliante selon l'une quelconque des revendications précédentes, **caractérisée en ce que**
le dispositif de soutien (40) respectivement de l'étrier (40) forme une prise (54) ou une zone de prise (54) pour amener le dessus de table (10) de sa position escamotée à sa position déployée.

5. Table pliante selon l'une quelconque des revendications précédentes, **caractérisée en ce que**
le dispositif de soutien (40) respectivement de l'étrier (40) peut être déplacé de manière sensiblement progressive entre sa position rentrée et sa position sortie, en prévoyant éventuellement des positions de blocage.

6. Table pliante selon l'une quelconque des revendications précédentes,
**caractérisée en ce que**
il est prévu une sécurité de surcharge (56) pour le dispositif de soutien (40) respectivement de l'étrier (40).

7. Table pliante selon la revendication 6,
**caractérisée en ce que**
la sécurité de surcharge est réversible.

8. Table pliante selon l'une quelconque des revendications précédentes, **caractérisée en ce que**
le dispositif de soutien (40) respectivement de l'étrier (40) est maintenu à la face inférieure de la table pliante.

9. Table pliante selon l'une quelconque des revendications précédentes, **caractérisée en ce que**
la table pliante (1) respectivement le dessus de table (10) présente une partie de table supérieure (36) de préférence sensiblement en forme de plaque, ainsi qu' une partie de table inférieure (38) de préférence sensiblement en forme de plaque et le dispositif de soutien (40) respectivement de l'étrier (40) est maintenu entre cette partie de table supérieure (36) et cette partie de table inférieure (38).

10. Siège de véhicule, en particulier siège de voiture de chemin de fer, comprenant une assise et un dossier, ainsi qu' une table pliante (1) agencée sur la partie du dossier opposée à la surface assise, laquelle table pliante (1) présente un dessus de table (10) maintenu sur le dossier de manière à être relativement mobile par rapport à celui-ci,
**caractérisé en ce que**
la table pliante (1) est conformée selon l'une quelconque des revendications précédentes.
